# EUROPEAN PATENT SPECIFICATION

(11) **EP 2 169 927 B1**
(45) Date of publication and mention of the grant of the patent: **13.06.2018**
(21) Application number: 09171209.1
(22) Date of filing: 24.09.2009
(51) Int. Cl.: H04M 1/725, H04M 1/2745, G06F 3/048, G06F 3/0488

(54) **Communication method and communication device thereof**
Kommunikationsverfahren und Kommunikationsvorrichtung damit
Procédé de communication et dispositif de communication correspondant

(30) Priority: 26.09.2008 US 239529; 01.12.2008 TW 97146680; 06.08.2009 US 536623
(43) Date of publication of application: 31.03.2010
(73) Proprietor: HTC Corporation, Taoyuan City 330 (TW)
(72) Inventor: Chiang, Ching-Liang, 330 Taoyuan County (TW); Tai, Chih-Wei, 330 Taoyuan County (TW); Chen, Chi-Nien, 330 Taoyuan County (TW); Lu, Tai-Ling, 330 Taoyuan County (TW)
(74) Representative: Carstens, Dirk Wilhelm

(56) References cited:
- EP-A- 1 480 422
- WO-A-98/21871
- US-A- 5 533 110
- US-A1- 2006 095 575
- US-A1- 2006 264 235
- US-A1- 2009 054 107

## Description

### BACKGROUND OF THE INVENTION

### Field of the Invention

The invention relates in general to a communication method and a communication device thereof, and more particularly to a communication method implemented by a drag-and-drop operation, and a communication device thereof.

### Description of the Related Art

With the development of the technology, communication devices have become more and more popular. Users can talk with each other and may also exchange information through the communication devices.

In some cases, the user may get a caller's phone call for asking a telephone number of a third party. At this time, the user needs to have the caller wait for a moment, and then the user opens the address book of the communication device and searches whether the address book contains the telephone number of the third party, and then tells the caller the result.

However, after the user spends a long time to find the telephone number of the third party, the user has to remember or write down the telephone number, and then tell the caller. Consequently, the method of forwarding the telephone number of the third party is very inconvenient to the user, and the forwarded message tends to have errors because the user may incorrectly remember the telephone number. In addition, this method also needs to let the caller spend a long time to wait, and the communication cost is thus increased.

In addition, the communication device usually has the function of a multi-party conference call. In the conventional communication device, however, if the calling party wants to proceed the multi-party conference call, the calling party usually has to open the address book and select the telephone number of one contact after the telephone connection is established. Then, after the other telephone connection is established, the three-party conference call has to be set. Sometimes, the calling party tends to unintentionally hang up the phone when the calling party incorrectly touches the screen or when the calling party is unfamiliar with the setting method of the three-party conference call. This inconvenience in use tends to bring some unessential trouble to the calling party.

US Patent No. 5,533,110, entitled "Human machine interface for telephone feature invocation", discloses a method of providing a visual indication to a first communication connection (CC) subscriber of the status of a telephone CC comprising the steps of providing an icon on a display that represents the first CC subscriber, providing a call setup icon on a display representing a command to set up a CC, dragging the icon representing the first CC subscriber to the call setup icon, automatically displaying a directory of subscribers, dragging an identity of a second CC subscriber from the directory to the call setup icon, establishing a CC between communication apparatus used by the first subscriber and communication apparatus used by the second CC subscriber via subscriber's lines, changing the identity of the calls setup icon to a call icon, displaying an icon representing the second CC subscriber in the call icon, and displaying a new call setup icon, whereby icons representing CC subscribers of a call in progress are both represented and are visually discernible by the first CC subscriber in the call icon.

US Patent Application Publication No. 20060264235, entitled "Method and system for transmitting character messages in mobile communication terminal during conversation by telephone", discloses a method for transmitting a character message in a mobile communication terminal during a conversation by telephone comprises the steps of setting the mobile communication terminal to a character message-transmitting/receiving mode. The character message-transmitting/receiving mode is set while in a state in which a speech path has been established between the mobile communication terminal and a mobile communication terminal of a party other than the user. A character message is input at the mobile communication terminal by the user while in the character message-transmitting/receiving mode. Also while in the character message-transmitting/receiving mode, the mobile communication terminal processes the written character message and transmits the written character message to the mobile communication terminal of the other party via the established speech path.

WO Patent Application Publication No. WO9821871, entitled "TELECOMMUNICATION MANAGEMENT SYSTEM AND USER INTERFACE", discloses a method and a device for the management of a TAPI or TSAPI based telecommunications system through the use of a graphical user interface. Display (20) has a centrally located call control window (24d), a personal information manager graphical representation (28), a graphical representation of a call log database (30), as well as a number of buttons displayed along the top of the display. The buttons include Dial button (48), a Take Call button (50), a Hold button (52), a Transfer button (54), a Disconnect button (56), and a Show-Hide button (58). The invention displays incoming calls (26a) and outgoing calls (22a, 22b) as icons which are graphically manipulated to control the functions of the system. Conferencing system call (36a) is accomplished by the manipulation of icons and windows on the display.

Europe Patent Application 1480422, entitled "Enhanced telephony computer user interface allowing user interaction and control of a telephone using a personal computer" discloses an enhanced telephony (ET) computer user interface that seamlessly integrates features of a personal computer (PC) and a telephone into a coherent user interface. The user is provided with a rich variety of functionality that leverages the fact that the PC has considerably more processing power and greater access to variety of data than the ordinary telephone. This processing power and data access is used to the user's advantage as the telephone's capabilities and functionality are greatly expanded. In general, the ET user interface includes a plurality of environments for the user to choose. These environments include a My Contacts environment, a communication preferences environment, and a Call History environment. Each of these environments contains certain available processes and features for controlling and managing telephones.

US Patent Application Publication No. 20060095575, entitled "Interactive assistant for managing telephone communications", discloses an interactive assistant for managing telephone communications and services. A chat interface is provided to a device associated with an intended recipient of an incoming voice call. A chat message from the intended recipient is received through the chat interface. The chat message is presented to a calling party associated with the incoming call prior to a disposition of the call being determined. An interface provides controls for individually managing calls on a conference call, without affecting other calls on the conference call.

### SUMMARY OF THE INVENTION

The invention is directed to a communication method and a communication device thereof having the advantages that the operation of the calling party is easy, that the error cannot easily occur, that the communication function between the called party and the associated dragged and dropped contact item can be effectively performed and that the waiting time of each of the calling party and the called party can be shortened so that the product competitiveness is very high.

According to a first aspect of the present invention, a communication method is provided as set forth in claim 1.

According to a second aspect of the present invention, a communication device is provided as set forth in claim 7.

Preferred embodiments of the present invention may be gathered from the dependent claims.

The invention will become apparent from the following detailed description of the preferred but non-limiting embodiments. The following description is made with reference to the accompanying drawings.

### BRIEF DESCRIPTION OF THE DRAWINGS

FIG. 1 is a flow chart showing a communication method.
FIG. 2 is a block diagram showing an example of a communication device for performing the communication method of FIG. 1.
FIGS. 3A to 3D are schematic illustrations showing an example of a screen frame in the communication method of FIG. 1.
FIGS. 4A to 4D are schematic illustrations showing another example of the screen frame in the communication method of FIG. 1.

### DETAILED DESCRIPTION OF THE INVENTION

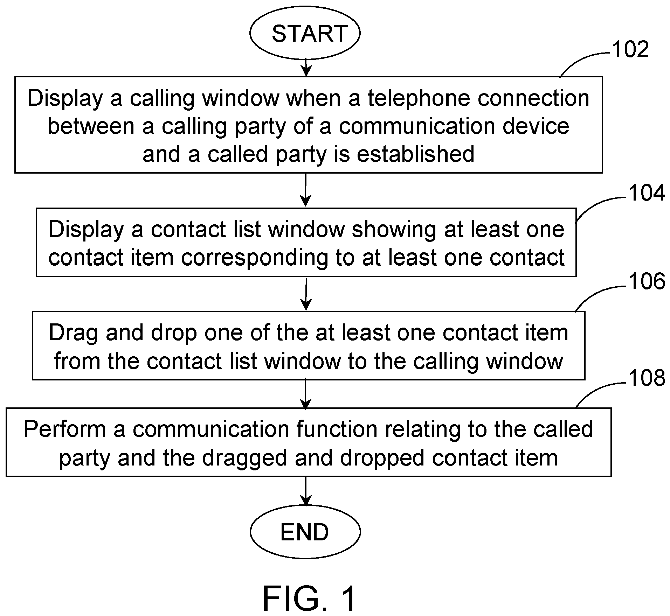

FIG. 1 is a flow chart showing a communication method. Referring to FIG. 1, the method includes steps 102, 104, 106 and 108. In the step 102, when a telephone connection between a calling party of a communication device and a called party is established, a calling window is displayed. In the step 104, a contact list window, which shows at least one contact item corresponding to at least one contact, is displayed. In the step 106, one of the at least one contact item is dragged and dropped from the contact list window to the calling window. In the step 108, a communication function, which relates to the called party and the dragged and dropped contact item, is performed.

The communication function may be the function of transmitting at least a portion of contact information (vCard/Versitcard) of the dragged and dropped contact item to the called party, or may be the function of performing a three-party conference call among the contact of the dragged and dropped contact item, the calling party and the called party.

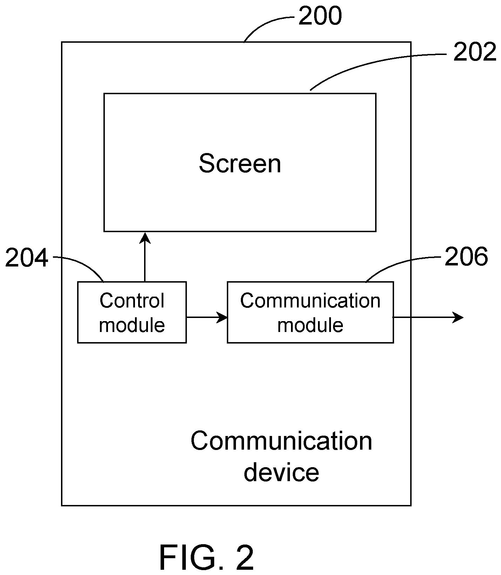

FIG. 2 is a block diagram showing an example of a communication device 200 for performing the communication method of FIG. 1. Referring to FIG. 2, the communication device 200 includes a screen 202, a control module 204 and a communication module 206. The screen 202 displays the calling window when the telephone connection between the calling party of the communication device and the called party is established, and displays the contact list window. The control module 204 controls the screen 202 and drags and drops the at least one contact item from the contact list window to the calling window in response to a calling party event. The communication module 206 performs the communication function. The calling party event is, for example, an event generated when the calling party operates the screen. The details will be described in the following.

When the telephone connection between the calling party and the called party is being established, and the called party asks the calling party a third party's contact information, or the calling party actively wants to transmit the third party's contact information to the called party, the calling party can quickly transmit the third party's contact information to the called party only through a simple drag-and-drop operation. This method can quickly and correctly transmit the third party's contact information so that the calling party can enjoy the high convenience in use and the waiting time of the called party can be shortened.

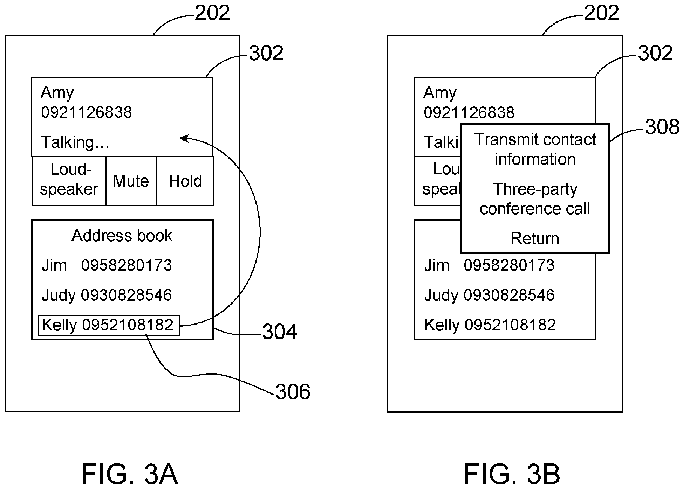

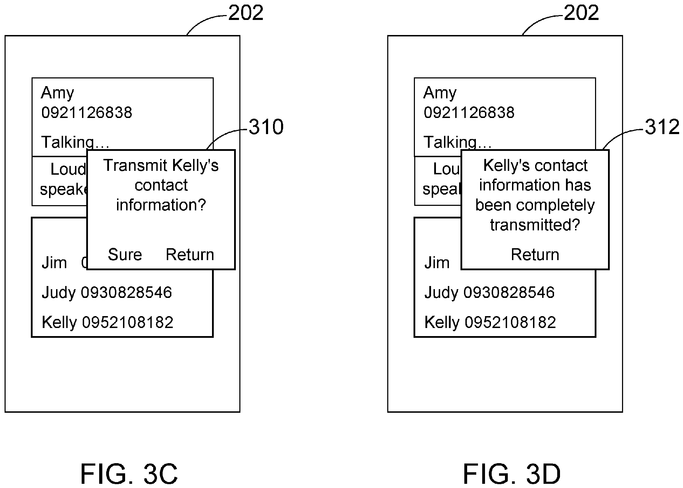

FIGS. 3A to 3D are schematic illustrations showing an example of a screen frame in the communication method of FIG. 1. As shown in a calling window 302 of the screen 202 of FIG. 3A, when the telephone connection between the calling party and the called party (e.g., Amy) is being established, Amy may ask the calling party the third party's (e.g., Kelly's) contact information. At this time, the calling party can open the address book of the communication device to search Kelly's contact information. After the address book is opened, the screen 202 displays a contact list window 304 to show many contact items corresponding to many contacts.

After the calling party has found Kelly's contact item 306, the calling party drags and drops the contact item 306 corresponding to Kelly to the calling window 302. At this time, a selection window 308, in which at least one option/options is/are listed so that the calling party can make a selection, appears on the screen 202. The listed options may contain a "Transmit contact information" option, a "Three-party conference call" option and a "Return" option, as shown in FIG. 3B.

After the calling party selects the "Transmit contact information" option, the screen 202 shows a query window 310 to query whether the calling party surely wants to transmit Kelly's contact information to Amy, as shown in FIG. 3C. If the calling party selects the "Sure" option, the communication device transmits Kelly's contact information in the address book to the called party Amy. After the operation of transmitting is finished, the communication device displays a message window 312 on the screen 202 to inform that the contact information of the third party Kelly has been completely transmitted.

In the operation of transmitting Kelly's contact information, the communication device can transmit all the contact information corresponding to the contact Kelly to Amy, and may also transmit a portion of the contact information corresponding to the contact Kelly to Amy. For example, the communication device may transmit Kelly's all the contact information, including an address, a home telephone number, an office telephone number, a mobile phone number, a birthday, an email account, and information of a text file or notes associated with Kelly. The communication device may also transmit only a portion of the contact information of Kelly (e.g., only Kelly's telephone number, or one of the information mentioned hereinabove).

In addition, in the operation of transmitting Kelly's contact information, the communication device packages Kelly's contact information as a short message transmitted to Amy in a short message transmit method. The content of the short message may include all the contact information of Kelly, a portion of the contact information of Kelly, or a text file or notes associated with Kelly.

The screen 202 of the communication device 200 is, for example, a touch screen, and is not limited thereto. Thus, the calling party may use a touch pen to finish the drag-and-drop operation and thus generate the calling party event, and the calling party may also directly use one finger to finish the drag-and-drop operation mentioned hereinabove.

Consequently, when the calling party selects the contact Kelly in the address book, the calling party can directly drag and drop Kelly's contact item into the calling window 302 without opening Kelly's contact item, and the communication device 200 can quickly transmit Kelly's contact information to Amy. This operation method can quickly and correctly transmit the contact information so that the calling party can feel the excellent convenience in operation and it is possible to prevent the called party from waiting for the too long time and from feeling fidgety.

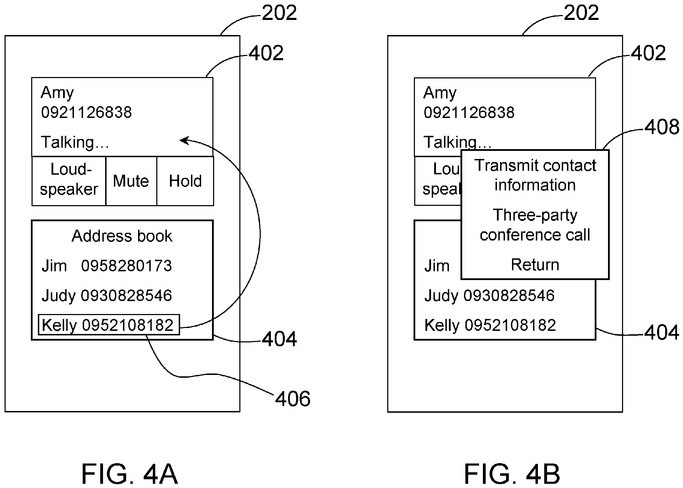

In addition to transmitting the contact information, the drag-and-drop operation may also be used in the mechanism of establishing the multi-party conference call. FIGS. 4A to 4D are schematic illustrations showing another example of the screen frame in the communication method of FIG. 1. As shown in a calling window 402 of the screen 202 of FIG. 4A, when the telephone connection between the calling party and the called party (e.g., Amy) is being established, the calling party may wish to let the third party (e.g., Kelly) participate in the talk. At this time, the calling party can open the address book of the communication device 200 to select the contact to be selected to participate in the talk. After the address book is opened, the screen 202 displays a contact list window 404 to show many contact items corresponding to many contacts.

After the calling party has found Kelly's contact information, the calling party drags and drops a contact item 406 corresponding to Kelly into the calling window 402. At this time, the screen 202 shows a selection window 408, which lists at least one option to be selected by the calling party. The listed options may be, for example, the "Transmit contact information" option, the "Three-party conference call" option and the "Return" option, as shown in FIG. 4B.

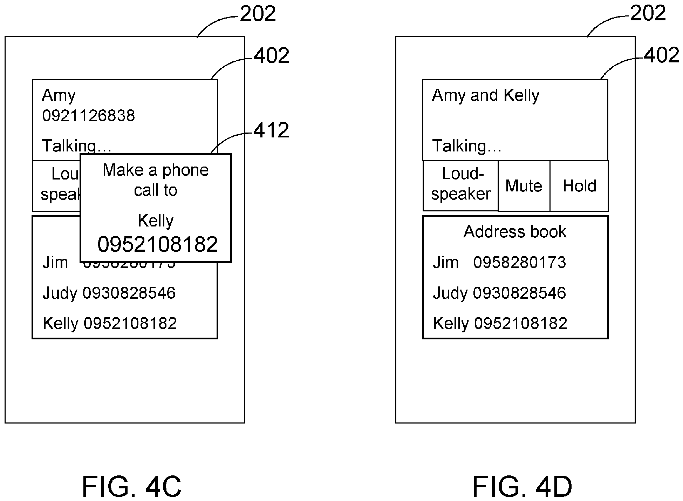

After the calling party selects the "Three-party conference call" option, the screen 202 shows a message window 412 to inform the calling party that the communication device is making a phone call to Kelly, as shown in FIG. 4C.

Next, as shown in FIG. 4D, after the multi-party conference call is successfully established, the calling window 402 on the screen 202 of the communication device displays the state of the multi-party conference call with Amy and Kelly.

The step of making the phone call to Kelly preferably includes the following sub-steps. In the first sub-step, the communication device 200 holds the talk of the calling party with Amy. In the second sub-step, the communication device dials the telephone number of Kelly's contact information. In the third sub-step, the talk with Amy is retrieved after the telephone connection with Kelly is established, and the talks between the calling party and Kelly and between the calling party and Amy are combined together to establish a multi-party conference call.

That is, after the calling party selects the "Three-party conference call" option of the selection window 408, the communication device 200 automatically performs the first to third sub-steps, and the calling party can omit the complicated procedure of setting the three-party conference call. Preferably, the communication device 200 performs the first to third sub-steps in the background, and the communication device 200 itself can finish the operation of setting the three-party conference call without the interposition of the calling party.

In addition and preferably, after the calling party selects the "Three-party conference call" option, the screen 202 may first appear another query window (not shown) so that the calling party can make sure whether the multi-party conference call is to be proceeded. After the calling party selects "Sure", the communication device 200 performs the operation of calling Kelly, and shows the message window 412 after the calling succeeds and the multi-party conference call is established.

The calling party can establish the multi-party conference call instinctively through the drag-and-drop operation according to the simultaneous display of the calling window 402 and the contact list window 404. This method can rapidly add the contact into the calling window 402 so that the multi-party conference call can be established. Compared with the prior art, this method can avoid the condition that the calling party incorrectly presses the option on the frame, or that the calling party unintentionally hangs up the call with the called party because the calling party is unfamiliar with the operation of the multi-party conference call. Thus, the invention has the advantages of the convenient, quick and easy operations.

In addition, although the "Transmit contact information" option, the "Three-party conference call" option and the "Return" option are listed in the selection window 308 of FIG. 3B, the "Three-party conference call" option may also be omitted from the selection window 308. Similarly, although the "Transmit contact information" option, the "Three-party conference call" option and the "Return" option are listed in the selection window 408 of FIG. 4B, the "Transmit contact information" option may also be omitted from the selection window 408.

The communication device may be a mobile phone, a personal digital assistant (PDA) or a portable computer. The electronic device having the screen can be applied to the communication method and the communication device thereof as long as the screen can show two windows so that the calling party can perform the drag-and-drop operation.

The communication method and the communication device thereof according to the invention have the advantages that the operation of the calling party is easy, that the error cannot easily occur, that the communication function between the called party and the associated dragged and dropped contact item can be effectively performed and that the waiting time of each of the calling party and the called party can be shortened so that the product competitiveness is very high.

## Claims

1. A communication method, comprising the steps of:
displaying a calling window (302,402) when a telephone connection between a calling party of a communication device (200) and a called party is established;
displaying a contact list window (304, 404), which shows at least one contact item (306, 406) corresponding to at least one contact;
dragging and dropping one of the at least one contact item (306, 406) from the contact list window (304, 404) to the calling window (302, 402), and displaying a selection window (308) having at least multiple options, wherein the at least multiple options comprise at least any one of a contact information transmission option and a conference call option; and
if the contact information transmission option is selected, transmitting at least a portion of contact information of the dragged and dropped contact item (306) to the called party; and
if the conference call option is selected, performing a three-party conference call among the contact of the dragged and dropped contact item (406), the calling party and the called party.

2. The method according to claim 1, wherein the at least a portion of contact information of the dragged and dropped contact item (306) is transmitted to the called party through a short message.

3. The method according to claim 1 or 2, wherein the at least a portion of contact information comprises a telephone number corresponding to the contact.

4. The method according to any one of claims 1 to 3, wherein the at least a portion of contact information comprises at least one of an address, a home telephone number, an office telephone number, a mobile phone number, a birthday and an email account corresponding to the contact, and information of a text file or notes associated with the contact.

5. The method according to any one of claims 1 to 4, wherein the step of performing the three-party conference call comprises the sub-steps of:
holding a talk with the called party;
dialing a telephone number in contact information of the dragged and dropped contact item (406); and
retrieving the talk with the called party after a telephone connection with the contact corresponding to the dragged and dropped contact item (406) is established, and combining the talks between the calling party and the contact and between the calling party and the called party together to form a multi-party conference call.

6. The method according to claim 5, wherein the sub-steps of holding the talk with the called party, dialing and forming the multi-party conference call are performed in a background.

7. A communication device (200), comprising:
a screen (202) for displaying a calling window (302, 402) and displaying a contact list window (304, 404), which shows at least one contact item (306, 406) corresponding to at least one contact, when a telephone connection between a calling party of the communication device (200) and a called party is established;
a control module (204) for controlling the screen (202) and dragging and dropping one of the at least one contact item (306, 406) from the contact list window (304, 404) to the calling window (302, 402) and for controlling the screen (202) for displaying a selection window (308) having at least multiple options, wherein the at least multiple options comprise at least any one of a contact information transmission option and a conference call option in response to a calling party event; and
a communication module (206) for performing a communication function according to a selected option of the options of the selection window (308),
wherein if the contact information transmission option is selected, the control module (204) is adapted to control the communication module (206) to transmit at least a portion of contact information of the dragged and dropped contact item (306) to the called party; and
if the conference call option is selected, the control module (204) is adapted to control the communication module (206) to perform a three-party conference call among the contact of the dragged and dropped contact item (406), the calling party and the called party.

8. The communication device according to claim 7, wherein the at least a portion of contact information of the dragged and dropped contact item (306) is transmitted to the called party through a short message.

9. The communication device according to claim 7 or 8, wherein the at least a portion of contact information comprises a telephone number corresponding to the contact.

10. The communication device according to any one of claims 7 to 9, wherein the at least a portion of contact information comprises at least one of an address, a home telephone number, an office telephone number, a mobile phone number, a birthday and an email account corresponding to the contact, and information of a text file or notes associated with the contact.

11. The communication device according to any one of claims 7 to 10, wherein the communication module (206) is adapted to perform the three-party conference call by means for performing operations of holding a talk with the called party, means for dialing a telephone number in contact information of the dragged and dropped contact item (406), means for retrieving the talk with the called party after a telephone connection with the contact corresponding to the dragged and dropped contact item (406) is established, and means for combining the talks between the calling party and the contact and between the calling party and the called party together to form a multi-party conference call.

## Patentansprüche

1. Ein Kommunikationsverfahren, das die folgenden Schritte aufweist:
Anzeigen eines Anruffensters (302, 402), wenn eine Telefonverbindung zwischen einer anrufenden Partei einer Kommunikationseinrichtung (200) und einer angerufenen Partei eingerichtet ist;
Anzeigen eines Kontaktlistenfensters (304, 404), das wenigstens ein Kontaktelement (306, 406), das wenigstens einem Kontakt entspricht, zeigt.
Ziehen und Ablegen bzw. Drag-and-Drop eines des wenigstens einen Kontaktelements (306, 406) von dem Kontaktlistenfenster (304, 404) in das Anruffenster (302, 402), und Anzeigen eines Auswahlfensters (308), das wenigstens mehrere Optionen hat, wobei die wenigstens mehreren Optionen wenigstens eine von einer Kontaktinformationssendungsoption und einer Konferenzanrufoption aufweisen; und
wenn die Kontaktinformationssendungsoption ausgewählt wird, Senden wenigstens eines Teils der Kontaktinformation des gezogenen und abgelegten bzw. des mittels Drag-and-Drop bewegten Kontaktelementes (306) an die angerufene Partei; und
wenn die Konferenzanrufoption ausgewählt wird, Durchführen eines Drei-Parteien-Konferenzanrufs zwischen dem Kontakt des mittels Drag-and-Drop bewegten Kontaktelementes (406), der anrufenden Partei und der angerufenen Partei.

2. Verfahren nach Anspruch 1, wobei der wenigstens eine Teil der Kontaktinformation des mittels Drag-and-Drop bewegten Kontaktelements (306) an die angerufene Partei durch eine Kurznachricht gesendet wird.

3. Verfahren nach Anspruch 1 oder 2, wobei der wenigstens eine Teil der Kontaktinformation eine Telefonnummer aufweist, die dem Kontakt entspricht.

4. Verfahren nach einem der Ansprüche 1 bis 3, wobei der wenigstens eine Teil der Kontaktinformation wenigstens eines von einer Adresse, einer Privattelefonnummer, einer Bürotelefonnummer, einer Mobilfunktelefonnummer, einem Geburtstag und einem Emailkonto ist, die bzw. das dem Kontakt entspricht, und Information einer Textdatei oder von Notizen, die mit dem Kontakt assoziiert sind, aufweist.

5. Verfahren nach einem der Ansprüche 1 bis 4, wobei der Schritt des Durchführens des Drei-Parteien-Konferenzanrufs die folgenden Unterschritte aufweist:
Halten eines Gesprächs mit der angerufenen Partei;
Wählen einer Telefonnummer in der Kontaktinformation des mittels Drag-and-Drop bewegten Kontaktelements (406); und
Wiederaufnehmen des Gesprächs mit der angerufenen Partei, nachdem eine Telefonverbindung mit dem Kontakt, der dem mittels Drag-and-Drop bewegten Kontaktelement (406) entspricht, eingerichtet worden ist und Kombinieren der Gespräche zwischen der anrufenden Partei und dem Kontakt und zwischen der anrufenden Partei und der angerufenen Partei miteinander, um einen Mehrparteienkonferenzanruf zu bilden.

6. Verfahren nach Anspruch 5, wobei die Unterschritte des Haltens des Gesprächs mit der angerufenen Partei, des Wählens und des Bildens des Mehrparteienkonferenzanrufs im Hintergrund durchgeführt werden.

7. Eine Kommunikationseinrichtung (200), die Folgendes aufweist:
einen Bildschirm (202) zum Anzeigen eines Anruffensters (302, 402) und zum Anzeigen eines Kontaktlistenfensters (304, 404), welches wenigstens ein Kontaktelement (306, 406) zeigt, das wenigstens einem Kontakt entspricht, wenn eine Telefonverbindung zwischen einer anrufenden Partei der Kommunikationseinrichtung (200) und einer angerufenen Partei eingerichtet ist;
ein Steuermodul (204) zum Steuern des Bildschirms (202) und zum Ziehen und Ablegen bzw. Drag-and-Drop eines des wenigstens einen Kontaktelementes (306, 406) aus dem Kontaktlistenfenster (304, 404) in das Anruffenster (302, 402) und zum Steuern des Bildschirms (202) zum Anzeigen eines Auswahlfensters (308), das wenigstens mehrere Optionen hat, wobei die wenigstens mehreren Optionen wenigstens eine von einer Kontaktinformationssendungsoption und einer Konferenzanrufoption aufweisen, und zwar ansprechend auf einen Vorgang der anrufenden Partei; und
ein Kommunikationsmodul (206) zum Durchführen einer Kommunikationsfunktion gemäß einer ausgewählten Option der Optionen des Auswahlfensters (308),
wobei, wenn die Kontaktinformationssendungsoption ausgewählt wird, das Steuermodul (204) ausgelegt ist zum Steuern des Kommunikationsmoduls (206) zum Senden wenigstens eines Teils der Kontaktinformation des mittels Drag-and-Drop bewegten Kontaktelements (306) an die angerufene Partei; und
wenn die Konferenzanrufoption ausgewählt wird, das Steuermodul (204) ausgelegt ist zum Steuern des Kommunikationsmodus (206) zum Durchführen eines Drei-Parteien-Konferenzanrufs zwischen dem Kontakt des mittels Drag-and-Drop bewegten Kontaktelements (406), der anrufenden Partei und der angerufenen Partei.

8. Kommunikationseinrichtung nach Anspruch 7, wobei der wenigstens eine Teil der Kontaktinformation des mittels Drag-and-Drop bewegten Kontaktelements (306) an die angerufene Partei durch eine Kurznachricht gesendet wird.

9. Kommunikationseinrichtung nach Anspruch 7 oder 8, wobei der wenigstens eine Teil der Kontaktinformation eine Telefonnummer aufweist, die dem Kontakt entspricht.

10. Kommunikationseinrichtung nach einem der Ansprüche 7 bis 9, wobei der wenigstens eine Teil der Kontaktinformation wenigstens eines von einer Adresse, einer Privattelefonnummer, einer Bürotelefonnummer, einer Mobilfunktelefonnummer, einem Geburtstag und einem Emailkonto ist, die bzw. das dem Kontakt entspricht, und Information einer Textdatei oder von Notizen, die mit dem Kontakt assoziiert sind, aufweist.

11. Kommunikationseinrichtung nach einem der Ansprüche 7 bis 10, wobei das Kommunikationsmodul (206) ausgelegt ist zum Durchführen des Drei-Parteien-Konferenzanrufs durch Mittel zum Durchführen von Vorgängen zum Halten eines Anrufs mit der angerufenen Partei, Mittel zum Wählen einer Telefonnummer in der Kontaktinformation des mittels Drag-and-Drop bewegten Kontaktelements (406), Mittel zum Wiederaufnehmen des Gesprächs mit der angerufenen Partei, nachdem eine Telefonverbindung mit dem Kontakt, der dem mittels Drag-and-Drop bewegten Kontaktelement (406) entspricht, eingerichtet worden ist, und Mittel zum Kombinieren der Gespräche zwischen der anrufenden Partei und dem Kontakt und zwischen der anrufenden Partei und der angerufenen Partei miteinander, um einen Mehrparteienkonferenzanruf zu bilden.

## Revendications

1. Procédé de communication, comprenant les étapes suivantes :
afficher une fenêtre d'appel (302, 402) lorsqu'une connexion téléphonique entre un appelant d'un dispositif de communication (200) et un appelé est établie ;
afficher une fenêtre de liste de contacts (304, 404), qui présente au moins un élément de contact (306, 406) correspondant à au moins un contact ;
faire glisser et déposer l'un desdits au moins un élément de contact (306, 406) à partir de la fenêtre de liste de contacts (304, 404) vers la fenêtre d'appel (302, 402), et afficher une fenêtre de sélection (308) comportant au moins de multiples options, lesdites aux moins de multiples options comprenant au moins l'une d'une option de transmission d'informations de contact et d'une option d'appel en conférence ; et
si l'option de transmission d'informations de contact est sélectionnée, émettre au moins une portion d'informations de contact de l'élément de contact glissé et déposé (306) vers l'appelé ; et
si l'option d'appel en conférence est sélectionnée, réaliser un appel en conférence à trois entre le contact de l'élément de contact glissé et déposé (406), l'appelant et l'appelé.

2. Procédé selon la revendication 1, dans lequel ladite au moins une portion d'informations de contact de l'élément de contact glissé et déposé (306) est transmise à l'appelé par l'intermédiaire d'un message court.

3. Procédé selon la revendication 1 ou 2, dans lequel ladite au moins une portion d'informations de contact comprend un numéro de téléphone correspondant au contact.

4. Procédé selon l'une quelconque des revendications 1 à 3, dans lequel ladite au moins une portion d'informations de contact comprend au moins un élément parmi une adresse, un numéro de téléphone de domicile, un numéro de téléphone de bureau, un numéro de téléphone mobile, une date d'anniversaire et un compte de courrier électronique correspondant au contact, et des informations d'un fichier de texte ou des notes associées au contact.

5. Procédé selon l'une quelconque des revendications 1 à 4, dans lequel l'étape de réalisation de l'appel en conférence à trois comprend les sous-étapes suivantes :
maintenir un état de conversation avec l'appelé ;
composer un numéro de téléphone se trouvant dans les informations de contact de l'élément de contact glissé et déposé (406) ; et
récupérer l'état de conversation avec l'appelé après qu'une connexion téléphonique avec le contact correspondant à l'élément de contact glissé et déposé (406) a été établie, et combiner les états de conversation entre l'appelant et le contact et entre l'appelant et l'appelé ensemble pour former un appel en conférence multi-partie.

6. Procédé selon la revendication 5, dans lequel les sous-étapes consistant à maintenir l'état de conversation avec l'appelé, à composer un numéro et former l'appel en conférence multi-partie sont réalisées en tâche de fond.

7. Dispositif de communication (200) comprenant :
un écran (202) pour afficher une fenêtre d'appelant (302, 402) et afficher une fenêtre de liste de contacts (304, 404), qui montre au moins un élément de contact (306, 406) correspondant à au moins un contact, lorsqu'une connexion téléphonique entre un appelant du dispositif de communication (200) et un appelé est établie ;
un module de commande (204) pour contrôler l'écran (202) et faire glisser et déposer l'un desdits au moins un élément de contact (306, 406) à partir de la fenêtre de liste de contacts (304, 404) vers la fenêtre d'appelant (302, 402) et pour contrôler l'écran (202) pour afficher une fenêtre de sélection (308) comportant au moins de multiples options, lesdites aux moins de multiples options comprenant au moins l'une d'une option de transmission d'informations de contact et d'une option d'appel en conférence en réponse à un événement d'appelant ; et
un module de communication (206) pour réaliser une fonction de communication conformément à une option sélectionnée des options de la fenêtre de sélection (308),
dans lequel si l'option de transmission d'informations de contact est sélectionnée, le module de commande (204) est adapté à contrôler le module de communication (206) pour émettre au moins une portion d'informations de contact de l'élément de contact glissé et déposé (306) vers l'appelé ; et
si l'option d'appel en conférence est sélectionnée, le module de commande (204) est adapté à contrôler le module de communication (206) pour réaliser un appel en conférence à trois entre le contact de l'élément de contact glissé et déposé (406), l'appelant et l'appelé.

8. Dispositif de communication selon la revendication 7, dans lequel ladite au moins une portion d'informations de contact de l'élément de contact glissé et déposé (306) est transmise à l'appelé par l'intermédiaire d'un message court.

9. Dispositif de communication selon la revendication 7 ou 8, dans lequel ladite au moins une portion d'informations de contact comprend un numéro de téléphone correspondant au contact.

10. Dispositif de communication selon l'une quelconque des revendications 7 à 9, dans lequel ladite au moins une portion d'informations de contact comprend au moins un élément parmi une adresse, un numéro de téléphone de domicile, un numéro de téléphone de bureau, un numéro de téléphone mobile, une date d'anniversaire et un compte de courrier électronique correspondant au contact, et des informations d'un fichier de texte ou des notes associées au contact.

11. Dispositif de communication selon l'une quelconque des revendications 7 à 10, dans lequel le module de communication (206) est adapté à réaliser l'appel en conférence à trois par des moyens pour réaliser des opérations de maintien d'un état de conversation avec l'appelé, des moyens pour composer un numéro de téléphone se trouvant dans des informations de contact de l'élément de contact glissé et déposé (406), des moyens pour récupérer l'état de conversation avec l'appelé après qu'une connexion téléphonique avec le contact correspondant à l'élément de contact glissé et déposé (406) a été établie, et des moyens pour combiner les états de conversation entre l'appelant et le contact et entre l'appelant et l'appelé ensemble pour former un appel en conférence multi-partie.
